# EUROPEAN PATENT APPLICATION

(11) **EP 0 817 479 A2**
(43) Date of publication of application: **07.01.1998**
(21) Application number: 97401466.4
(22) Date of filing: 24.06.1997
(51) Int. Cl.: H04N 5/775

(54) **Video system control method**

(30) Priority: 25.06.1996 JP 184143/96
(71) Applicant: SONY CORPORATION, Tokyo (JP)
(72) Inventor: Sato, Masahiko, Shinagawa-ku, Tokyo (JP); Kohashi, Yukari, Shinagawa-ku, Tokyo (JP)
(74) Representative: Thévenet, Jean-Bruno

(57) **Abstract**

A method of controlling a video system which employs a single video display device (12) in common for a plurality of apparatus (1, 2) and performs communication of a control signal by mutually connecting the apparatus via a control bus (6). When the video output of one of the apparatus (2) in the video system is being displayed on the video display device (12), the control method is carried out by actuating, in conformity with such display, a commander (8) belonging to the video display device (12) or a commander belonging to another apparatus (1) different from the aforesaid one apparatus, thereby controlling the operation of the one apparatus (2). Consequently, it becomes possible to simplify the manipulation of the plural apparatus by the use of a single remote commander.

## Description

### BACKGROUND OF THE INVENTION

### 1. Field of the Invention

The present invention relates to a system where a plurality of AV (audio-visual) apparatus for example are mutually connected via an AV link, and more particularly to a technique which realises control of a plurality of apparatus by means of a single remote commander.

### 2. Description of the Related Art

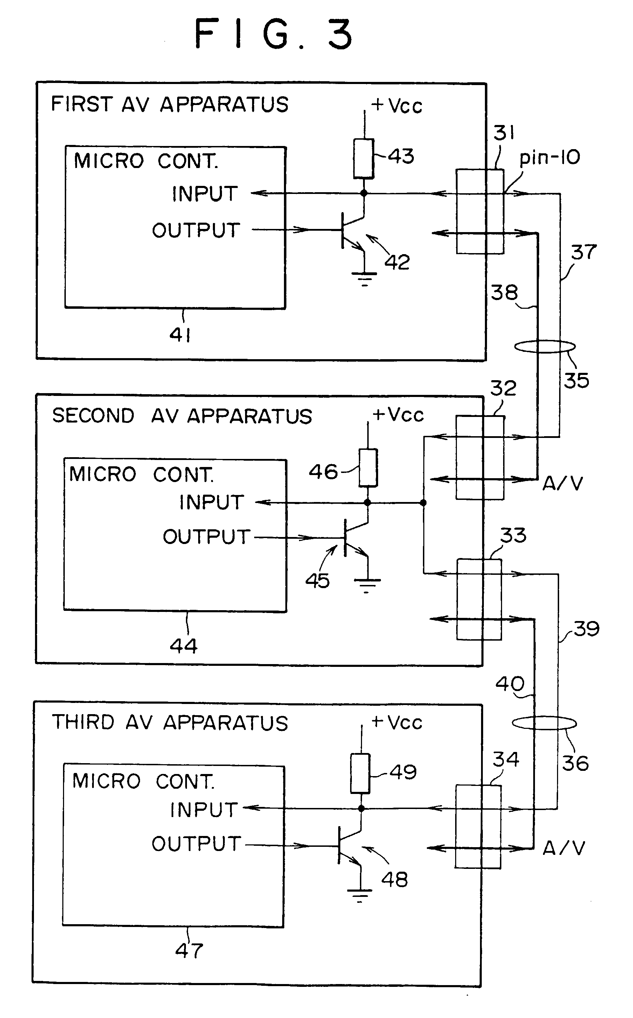

An AV link is a system bus for mutually connecting AV apparatus each employing a tenth pin (pin-10) of a SCART connector prescribed in the EN50049. The use of this AV link connects AV apparatus mutually via a single SCART cable to thereby realize interactive bidirectional communication of audio, video and control signals. Fig. 3 shows an exemplary system which performs such communication.

This system consists of first to third AV apparatus. Each of these AV apparatus is, typically, a video cassette recorder (hereinafter referred to as VCR), a television receiver (hereinafter referred to as TV), or an integral VCR with a built-in camera.

A SCART connector 31 is provided in the first AV apparatus, SCART connectors 32 and 33 in the second AV apparatus, and a SCART connector 34 in the third AV apparatus, respectively. A single SCART cable 35 is connected between the SCART connectors 31 and 32, and also a single SCART cable 36 is connected between the SCART connectors 33 and 34.

In the SCART cable 35, a control signal line 37 is provided between the respective tenth pins of the SCART connectors 31 and 32, and further an information signal line 38 is provided for separately transmitting an audio signal and a video signal. Similarly in the SCART cable 36, a control signal line 39 is provided between the respective tenth pins of the SCART connectors 33 and 34, and further an information signal line 40 is provided for transmitting an audio signal and a video signal (hereinafter referred to collectively as AV signals).

The first AV apparatus has a micro controller 41 for inputting or outputting the control signal. The input of the micro controller 41 is connected to the tenth pin of the SCART connector 31. Each bidirectional arrow passing through the tenth pin indicates that the control signal line 37 is a bidirectional bus.

A source voltage +Vcc is supplied to the input of the micro controller 41 via a resistor 43. The base of an output transistor 42 is connected to the output of the micro controller 41, and the collector of the output transistor 42 is connected to the other end of the resistor 43 opposite to its one end connected to the source voltage +Vcc.

Regarding the second and third AV apparatus also, the same relationship of connection is existent between the inputs/outputs of the micro controllers 44, 47 and the tenth pins of the SCART connectors 32, 33, 34, and also between the inputs/outputs thereof and the source voltage +Vcc.

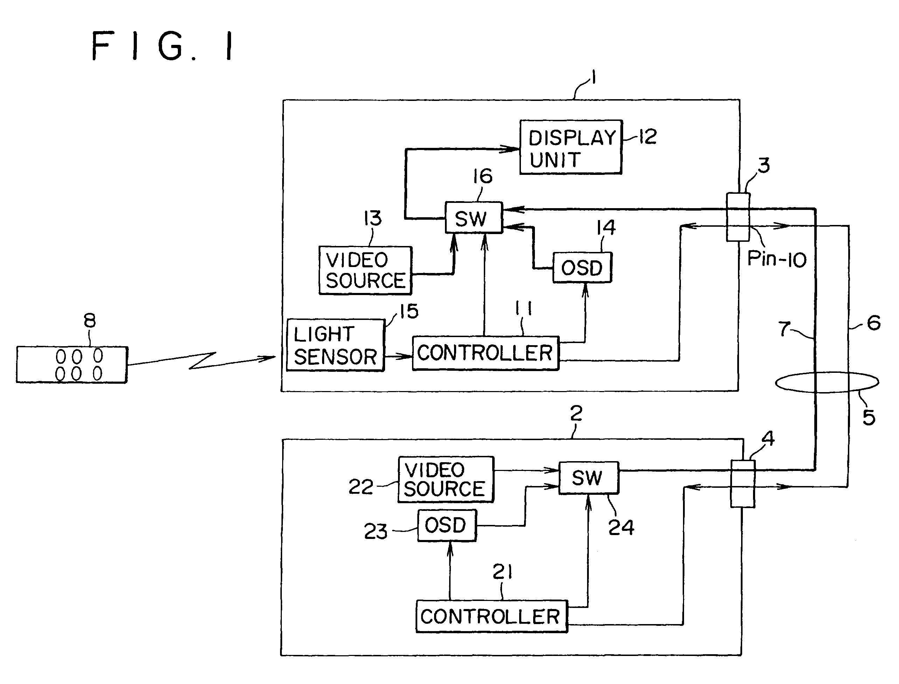

The input and output of the control signal have been described above. Although not shown in Fig. 1, a block for processing the audio and video signals is provided in each of the first to third AV apparatus. Bidirectional arrows given to the junctions of the SCART connectors 31, 32 and the information signal line 38, and also those given to the junctions of the SCART connectors 33, 34 and the information signal line 40, indicate that the AV signals can be transmitted bidirectionally through the information signal lines 38 and 40.

In this manner, it becomes possible to transmit the audio, video and control signals bidirectionally between the first, second and third AV apparatus by connecting such apparatus via a single SCART cable.

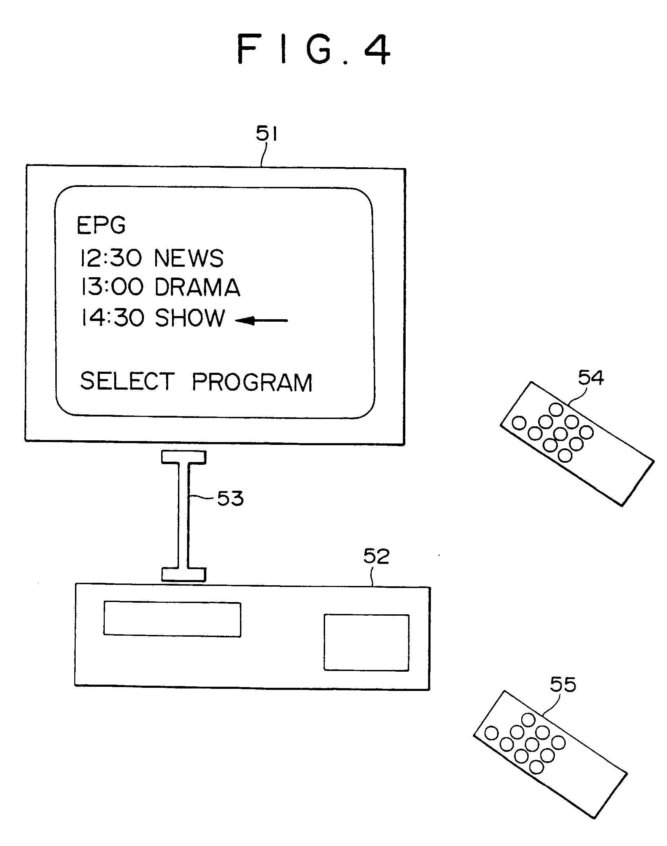

Fig. 4 shows a system where a TV 51 and a VCR 52 are connected to each other via a SCART cable 53 mentioned above. In this system, the TV 51 is equipped with a device for receiving an EPG (electric programming guide) and a display device therefor.

Suppose now that, in this system, a desired program is selected by the use of a cursor or the like on the EPG display and then timer-reserved information of the VCR 52 is transmitted via an AV link to the VCR 52 in accordance with the selection. When the timer-reserved information to be transmitted is disadvantageous for the VCR 52, i.e., when an old event already reserved and a new event to be reserved are mutually coincident in time for example, if priority is given to the new event, it is necessary to execute manipulation for once displaying a menu of the VCR 52 on the screen of the TV 51 and then cancelling the old event.

For cancelling the old event, it is necessary to perform a procedure of first displaying the output of the VCR after switching the input of the TV 51 by a remote commander 54 of the TV 51, then displaying the menu of the VCR 52 by a remote commander 55 of the VCR 52, and subsequently executing the required manipulation. Therefore, the manipulation is complicated since a plurality of remote commanders are used in succession.

In realizing a function to interlock a plurality of apparatus with each other in this manner, if a certain manipulation to be executed on the menu of one apparatus fails to be properly executed due to some disadvantage of the other apparatus, it becomes necessary to use the remote commander of the other apparatus so as to eliminate the disadvantage by switching the display to the menu of the other apparatus.

### SUMMARY OF THE INVENTION

It is therefore an object of the present invention to enable simplified manipulation of a plurality of apparatus by the use of a single remote commander in a video system which employs a single video display device in common for the plurality of apparatus and performs communication of a control signal by mutually connecting the apparatus via a control bus.

According to an aspect of the present invention, there is provided an improvement in a method of controlling a video system which employs a single video display device in common for a plurality of apparatus and performs communication of a control signal by mutually connecting the apparatus via a control bus. When the video output of one of the apparatus in the video system is being displayed on the video display device, the method of the present invention is carried out by actuating, in conformity with such display, a commander belonging to the video display device or a commander belonging to another apparatus different from the aforesaid one apparatus, thereby controlling the operation of the one apparatus.

In the present invention, when the video output of one of the apparatus in the video system is being displayed on the video display device, the operation of such one apparatus is controlled by actuating, in conformity with such display, a commander belonging to the video display device or a commander belonging to another apparatus different from the one apparatus.

Consequently, it becomes possible to simplify the manipulation of the plural apparatus.

The above and other features and advantages of the present invention will become apparent from the following description which will be given with reference to the illustrative accompanying drawings.

### BRIEF DESCRIPTION OF THE DRAWINGS

Fig. 1 is a block diagram showing a first structure of a system where the present invention is applied;
Fig. 2 is a block diagram showing a second structure of a system where the present invention is applied;
Fig. 3 is a diagram showing a structure of a system where a plurality of AV apparatus are mutually connected via an AV link; and
Fig. 4 is a schematic diagram illustrating how a program is reserved in a system where a TV and a VCR are mutually connected via a SCART cable.

### DESCRIPTION OF THE PREFERRED EMBODIMENTS

Hereinafter some preferred embodiments of the present invention will be described in detail with reference to the accompanying drawings.

### [First Embodiment]

Fig. 1 is a block diagram showing a first structure of a system where the present invention is applied. In this system, as shown in the diagram, a SCART connector 3 provided in a TV 1 and a SCART connector 4 provided in a VCR 2 are connected to each other via a SCART cable 5. And in the SCART cable 5, there are included a control signal line 6 which connects respective tenth pins of the SCART connectors 3 and 4, and an information signal line 7 for separately transmitting AV signals therethrough. As mentioned, the control signal line 6 and the information signal line 7 are each adapted for bidirectional communication. However, regarding the video signal, an explanation will be given below merely on transmission in one direction from the VCR 2 to the TV 1.

The TV 1 comprises a controller 11 to perform management and control of the entire TV, a display unit 12 for visually representing a video image thereon, a video source 13, an on-screen display device (hereinafter referred to as OSD) 14, a light sensor 15 to receive the output of a remote commander 8, and a switch 16 for selectively switching the output of the video source 13, the output of the OSD 14 or the input from the information signal line 7 and delivering the selected signal to the display unit 12.

The VCR 2 comprises a controller 21 to perform management and control of the entire VCR 2, a video source 22, an OSD 23, and a switch 24 for selectively switching the output of the video source 22 or the output of the OSD 23 and delivering the selected output to the information signal line 7.

Now an explanation will be given of a procedure to manipulate the menu of the VCR by means of the remote commander 8 belonging to the TV 1.

First, if any situation disadvantageous for the VCR 2 has occurred when the output of the video source 13 or the output of the OSD 14 is being displayed on the display unit 12 of the TV 1, the controller 21 in the VCR 2 controls the switch 24 to thereby change the video output of the VCR 2 to the OSD 23. Here, any situation disadvantageous for the VCR 2 signifies a case where, for example, an old event already reserved and a new event to be reserved are coincident in time with each other.

Next the controller 21 requests the controller 11 of the TV 1 via the control signal line 6 to change the input of the switch 16 to the information signal line 7. In response to this request, the controller 11 in the TV 1 changes the switch 16 in such a manner that the input video data from the information signal line 7 is supplied to the display unit 12.

As a result of the above processing, the menu of the VCR 2 is displayed on the display unit 12 of the TV 1. Subsequently, while watching the displayed menu, the user performs a necessary menu manipulation by the use of a specific key of the remote commander 8. In this stage, the output of the remote commander 8 is converted by the light sensor 15 into an electric signal, which is further converted into an AV link control signal by the controller 11, and this control signal is outputted from the tenth pin of the SCART connector 3 to the control signal line 6. This control signal is inputted from the tenth pin of the SCART connector 4 to the controller 21, which then decodes the control signal to thereby control the display on the OSD 23.

Upon completion of the necessary menu manipulation, the user gives a trigger to the remote commander 8. Then the controller 11 detects this trigger and resets the input of the TV 1 to its initial state.

Thus, in the system of Fig. 1, when a specific key of the remote commander 8 belonging to the TV 1 has been depressed during the display time of the output of the VCR 2 on the display unit 12 of the TV 1, a control signal corresponding to the depressed key is transmitted via the AV link to the VCR 2, which is then controlled by such control signal. Therefore, in cancelling any old event for example, the conventional complicated manipulation using two remote commanders is no longer necessary.

### [Second Embodiment]

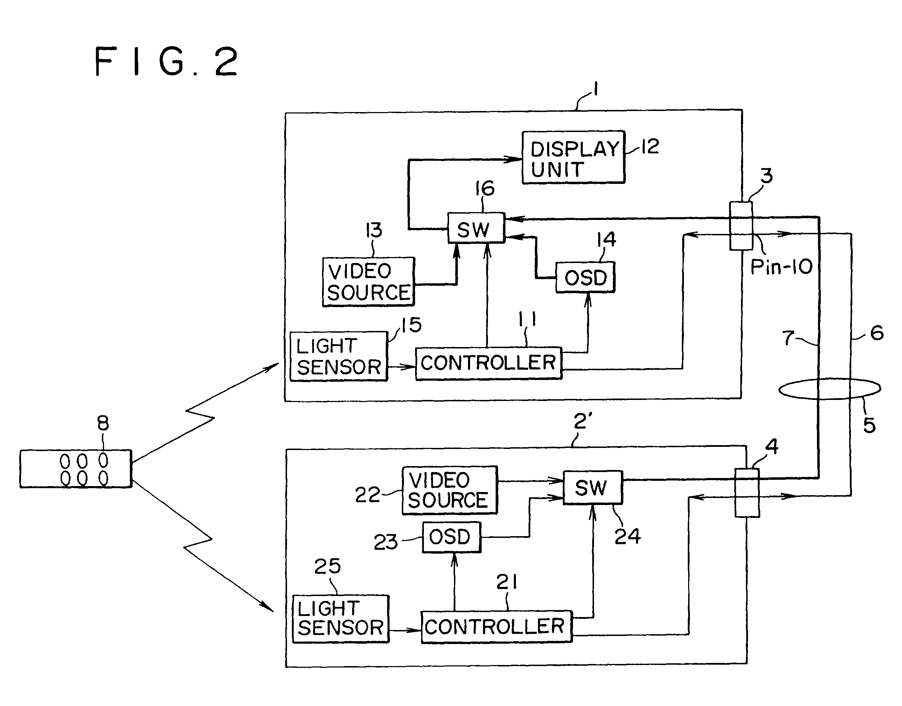

Fig. 2 is a block diagram showing a second structure of a system where the present invention is applied. In this diagram, any components corresponding to those employed in Fig. 1 are denoted by like reference numerals. In the system of Fig. 2, a VCR 2' is equipped with a light sensor 25 to convert the output of a remote commander 8 into an electric signal. The remote commander 8 is so formed as to function not only for the TV 1 but also for the VCR 2'.

Hereinafter an explanation will be given on a procedure to manipulate the menu of the VCR 2' by means of the remote commander 8 belonging to the TV 1.

If any situation disadvantageous for the VCR 2' has occurred when the output of a video source 13 or the output of an OSD 14 is being displayed on a display unit 12 of the TV 1, first a controller 21 in the VCR 2' controls a switch 24 to thereby change the video output of the VCR 2 to an OSD 23.

Next the controller 21 requests a controller 11 of the TV 1 via a control signal line 6 to change the input of a switch 16 to an information signal line 7. In response to this request, the controller 11 in the TV 1 changes the switch 16 in such a manner that the input video data from the information signal line 7 is supplied to the display unit 12.

The above processing is the same as that executed in the aforementioned system of Fig. 1. As a result of such processing, the menu of the VCR 2' is displayed on the display unit 12 of the TV 1. Subsequently, while watching the displayed menu, the user performs a necessary menu manipulation by the use of a specific key of the remote commander 8. In this stage, the output of the remote commander 8 is converted by a light sensor 25 of the VCR 2' into an electric signal, which is then inputted to the controller 21. Subsequently the controller 21 interprets the input signal in conformity with the specification of the VCR 2' and executes a necessary menu manipulation. At this time, the controller 11 of the TV 1 neglects the signal inputted from the light sensor 15 of the TV 1.

Upon completion of the necessary menu manipulation, the user gives a trigger to the remote commander 8. Then the controller 11 detects this trigger and resets the input of the TV 1 to its initial state.

Thus, in the system of Fig. 2, when a specific key of the remote commander 8 belonging to the TV 1 has been depressed during the display time of the output of the VCR 2 on the display unit 12 of the TV 1, a control signal corresponding to the depressed key is used for manipulating the VCR 2' instead of being used for manipulating the TV 1. Therefore, in cancelling any old event for example, the conventional complicated manipulation using two remote commanders is no longer necessary.

It is to be understood that the present invention is not limited merely to the exemplary embodiments described above, and various modifications thereof may be contrived within the scope of the present invention.

For example, the procedure for switching the video input of the TV to the VCR output may be carried out by transferring a signal indicating the occurrence of any disadvantage from the VCR to the TV via the AV link, then enabling the TV to switch the video input automatically to the VCR output in response to the transferred signal, and transmitting, from the TV to the VCR via the AV link, a request which actuates the VCR to deliver a menu therefrom. The procedure may further be carried out by transferring a signal indicating the occurrence of any disadvantage from the VCR to the TV via the AV link, then enabling the TV to switch the video input to the VCR output automatically in response to the transferred signal, and driving the VCR to deliver a menu therefrom.

The present invention may be so constituted that, in a system where three or more AV apparatus are mutually connected via an AV link, e.g., in a system where a TV, a VCR and a satellite broadcasting tuner are mutually connected via an AV link, a menu of the VCR can be manipulated by a remote commander belonging to the satellite broadcasting tuner.

Further the present invention is applicable to a system where a control signal and a video signal are transmitted via separate cables, or to a system where such signals are transmitted through radio communication using infrared rays.

As described in detail hereinabove, according to the present invention, a plurality of apparatus can be manipulated by means of a single remote commander in a video system which employs a single video display device in common for such plurality of apparatus and performs communication of a control signal by mutually connecting the apparatus via a control bus. Consequently, it becomes possible to simplify the manipulation of the plural apparatus.

Although the present invention has been mentioned with reference to some preferred embodiments thereof, it is to be noted that the invention is not limited to such embodiments alone, and a variety of other changes and modifications will be apparent to those skilled in the art without departing from the scope of the invention as defined in the appended claims.

## Claims

1. A video system control method for controlling a video system which employs a single video display device (12) in common for a plurality of apparatus (1, 2) and performs communication of a control signal by mutually connecting said plurality of apparatus via a control bus (6), said method characterized by:
when the video output of one of the apparatus (2) in said video system is being displayed on said video display device (12), actuating, in conformity with such display, a commander (8) belonging to said video display device or a commander belonging to another apparatus (1) different from said one apparatus (2), thereby controlling the operation of said one apparatus (2).

2. The video system control method according to claim 1, wherein said control bus (6) is an AV link.

3. The video system control method according to claim 1 or 2, wherein, when the operation of said one apparatus (2) is controlled, a command received from the commander (8) belonging to said video display device (12) or said another apparatus (1) is transmitted via said control bus (6) to said one apparatus (2).

4. The video system control method according to claim 1 or 2, wherein, when the operation of said one apparatus (2') is controlled, said one apparatus (2') complies with a command from said commander (8), while said video display device (12) or said another apparatus (1) neglects said command.
